# EUROPEAN PATENT APPLICATION

(11) **EP 4 738 637 A1**
(43) Date of publication of application: **06.05.2026**
(21) Application number: 23944171.0
(22) Date of filing: 25.10.2023
(51) Int. Cl.: H02J 7/00, H02J 3/32

(54) **MODULATION METHOD AND APPARATUS FOR CASCADED ENERGY STORAGE SYSTEM**

(30) Priority: 04.07.2023 CN 202310808843
(71) Applicant: Contemporary Amperex Technology Co., Limited, Ningde, Fujian 352100 (CN)
(72) Inventor: CHEN, Xiaobo, Ningde, Fujian 352100 (CN); FAN, Mingshan, Ningde, Fujian 352100 (CN); LIU, Youwei, Ningde, Fujian 352100 (CN); HU, Lu, Ningde, Fujian 352100 (CN)
(74) Representative: Ziebig Hengelhaupt Intellectual Property Attorneys Patentanwaltskanzlei PartGmbB
(86) International application number: PCT/CN2023/126495
(87) International publication number: WO 2025/007449

(57) **Abstract**

The present application provides a modulation method and apparatus for a cascaded energy storage system. The cascaded energy storage system comprises N sub-modules which are connected in cascade, wherein N is greater than or equal to 2. The modulation method comprises: in an odd period, according to a first correspondence, using N carriers to modulate waveform signals output by the N sub-modules; and in an even period, according to a second correspondence, using the N carriers to modulate the waveform signals output by the N sub-modules, wherein in the first correspondence and the second correspondence, the N carriers are in one-to-one correspondence with the N sub-modules, and the first correspondence is different from the second correspondence. The modulation method provided by the present application can solve the problem of SOC imbalance of energy storage batteries of sub-modules in phases of the cascaded energy storage system in a phase-shifted carrier modulation method.

## Description

The present application claims priority to Chinese Patent Application No. 2023108088433, filed with China National Intellectual Property Administration on July 04, 2023 and entitled "MODULATION METHOD AND APPARATUS FOR CASCADED ENERGY STORAGE SYSTEM", which is incorporated herein by reference in its entirety.

### TECHNICAL FIELD

The present application relates to the technical field of energy storage systems, and in particular, to a modulation method and a modulation apparatus for a cascaded energy storage system.

### BACKGROUND

In a large-capacity battery energy storage system, a cascaded H-bridge energy storage system has advantages such as strong expandability, a large capacity, a high voltage, and a small harmonic content of an output voltage current, and therefore has a wide application prospect. A modulation strategy commonly used in a cascaded H-bridge battery energy storage system is a carrier phase shifted-pulse width modulation (PS-PWM) strategy. This modulation strategy has advantages such as high quality of output electric energy, capability of outputting a relatively high equivalent switching frequency at a relatively low carrier frequency, ease of controlling an output power of each unit, and ease of implementing modular distributed control.

In the PS-PWM modulation method, a control signal is output by comparing a triangular carrier with amodulation wave, that is, a PS-PWM signal output by each submodule is generated by comparing a triangular carrier with a sinusoidal wave. Because initial phase angles of carriers corresponding to the respective submodules are slightly different, output or input powers of different submodules are not completely consistent. Consequently, states of charge (SOCs) of energy storage batteries of different submodules are unbalanced. This shortens the service life of the energy storage system and reduces the use efficiency of the system.

### Technical Problem

An objective of the present application is to provide a modulation method and a modulation apparatus for a cascaded energy storage system, so as to solve a problem of imbalance of SOCs of energy storage batteries between intra-phase submodules of the cascaded energy storage system in a carrier phase-shifted modulation method.

### Technical Solution

The technical solutions adopted in embodiments of the present application are as follows:

In a first aspect, provided is a modulation method for a cascaded energy storage system, which includes: the cascaded energy storage system includes N submodules connected in cascade, where N ≥ 2, and the modulation method includes: modulating, during an odd-numbered cycle, waveform signals output by the N submodules using N carriers according to a first correspondence relationship; and modulating, during an even-numbered cycle, the waveform signals output by the N submodules using the N carriers according to a second correspondence relationship, where in the first correspondence relationship and the second correspondence relationship, the N carriers correspond one-to-one to the N submodules, and the first correspondence relationship is different from the second correspondence relationship.

In a possible implementation, the submodule corresponding to each carrier in the first correspondence relationship and the second correspondence relationship is different.

In a possible implementation, the submodules corresponding to a portion of the carriers in the first correspondence relationship and the second correspondence relationship are the same.

In a possible implementation, an i^{th} carrier in the first correspondence relationship and an (N+1-i)^{th} carrier in the second correspondence relationship correspond to the same submodule, where a larger value of i indicates a larger initial phase angle of the i^{th} carrier, and i is any positive integer not greater than N.

In a possible implementation, the N carriers are sorted in an ascending order of initial phase angles and then divided into M carrier groups, where a quantity of carriers included in each carrier group is the same and greater than 1, and M is an even number (e.g., 2, 4, or 6); carriers in an i^{th} carrier group in the first correspondence relationship and carriers in an (M+1-i)^{th} carrier group in the second correspondence relationship correspond to the same submodule, where i is any positive integer not greater than M.

In a possible implementation, an initial phase angle of an i^{th} carrier in the N carriers is (2π/N) × i, or the initial phase angle of the i^{th} carrier in the N carriers is (π/N) × i, where i is any positive integer not greater than N.

In a possible implementation, each submodule includes energy storage batteries disposed in parallel, an absorption capacitor, and a converter.

In a possible implementation, the cascaded energy storage system includes a cascaded H-bridge or a cascaded half-bridge.

In a possible implementation, the carrier includes a triangular carrier or a trapezoidal carrier.

In a second aspect, provided is a modulation apparatus for a cascaded energy storage system. The cascaded energy storage system includes N submodules connected in cascade, where N ≥ 2, and the modulation apparatus includes: a first modulation unit, configured to modulate, during an odd-numbered cycle, waveform signals output by the N submodules using N carriers according to a first correspondence relationship; and a second modulation unit, configured to modulate, during an even-numbered cycle, the waveform signals output by the N submodules using the N carriers according to a second correspondence relationship, where in the first correspondence relationship and the second correspondence relationship, the N carriers correspond one-to-one to the N submodules, and the first correspondence relationship is different from the second correspondence relationship.

In a possible implementation, the submodule corresponding to each carrier in the first correspondence relationship and the second correspondence relationship is different.

In a possible implementation, the submodules corresponding to a portion of the carriers in the first correspondence relationship and the second correspondence relationship are the same.

In a possible implementation, an i^{th} carrier in the first correspondence relationship and an (N+1-i)^{th} carrier in the second correspondence relationship correspond to the same submodule, where a larger value of i indicates a larger initial phase angle of the i^{th} carrier, and i is any positive integer not greater than N.

In a possible implementation, the N carriers are sorted in an ascending order of initial phase angles and then divided into M carrier groups, where a quantity of carriers included in each carrier group is the same and greater than 1, and M is an even number (e.g., 2, 4, or 6); carriers in an i^{th} carrier group in the first correspondence relationship and carriers in an (M+1-i)^{th} carrier group in the second correspondence relationship correspond to the same submodule, where i is any positive integer not greater than M.

In a possible implementation, an initial phase angle of an i^{th} carrier in the N carriers is (2π/N) × i, or the initial phase angle of the i^{th} carrier in the N carriers is (π/N) × i, where i is any positive integer not greater than N.

In a possible implementation, each submodule includes energy storage batteries disposed in parallel, an absorption capacitor, and a converter.

In a possible implementation, the cascaded energy storage system includes a cascaded H-bridge or a cascaded half-bridge.

In a possible implementation, the carrier includes a triangular carrier or a trapezoidal carrier.

In a third aspect, provided is a computer-readable storage medium. The computer-readable storage medium stores a computer program, and the computer program, when running on an electronic device, causes the electronic device to perform the modulation method according to any one of the implementations of the first aspect.

In a fourth aspect, provided is a modulation apparatus for a cascaded energy storage system, which includes a processor, a memory, and a computer program, where the computer program is stored in the memory, and the computer program, when executed by the processor, causes the modulation apparatus to perform the modulation method according to any one of the implementations of the first aspect.

In a fifth aspect, provided is a computer program product, which includes a computer program code, where the computer program code, when running on an electronic device, causes the electronic device to perform the modulation method according to any one of the implementations of the first aspect.

In a sixth aspect, provided is a chip, which includes a processor configured to invoke a computer program from a memory and execute the computer program, such that an electronic device provided with the chip performs the modulation method according to any one of the implementations of the first aspect.

It can be understood that the modulation apparatus according to the second aspect and the fourth aspect, the computer-readable storage medium according to the third aspect, the computer program product according to the fifth aspect, and the chip according to the sixth aspect are all configured to perform the modulation method according to the first aspect. Therefore, for beneficial effects that can be achieved by the modulation apparatus, the computer-readable storage medium, the computer program product, and the chip, refer to beneficial effects in the corresponding method as described above. Details are not described herein again.

### Beneficial Effects

The first aspect according to the embodiments of the present application has the beneficial effects that: The N carriers and the N submodules have two correspondence relationships: the first correspondence relationship and the second correspondence relationship, and the N carriers can be applied to the N submodules alternately by using the two correspondence relationships. Because the first correspondence relationship is different from the second correspondence relationship, within two adjacent cycles, two different carriers are applied to at least a portion of the N submodules for modulation. That is, waveform signals output by the same submodule may be alternately modulated by using two different carriers, and the same carrier can be applied to two different submodules. Therefore, the same submodule can be influenced by two carriers with different initial phase angles within two adjacent cycles, and the same carrier can influence two different submodules within two adjacent cycles. Compared with the related art in which waveform modulation is continuously performed on a submodule by using the same carrier based on a fixed correspondence relationship, the present application can alleviate unequal active power distribution of the submodules caused by the fixed correspondence relationship, and can suppress the energy unevenness, such that voltages on direct-current sides of the submodules tend to be consistent, and the inconsistency of the battery capacity can be alleviated, which equalizes the SOCs of the energy storage batteries.

In the modulation method for a cascaded energy storage system according to the embodiments of the present application, a carrier swapping operation is performed, such that a problem of imbalance of SOCs of energy storage batteries between intra-phase submodules of the cascaded energy storage system in a carrier phase-shifted modulation method can be solved. Therefore, the problem of overcharging and overdischarging of the battery set can be mitigated, the battery can operate in an optimal state, the utilization rate of the battery can be improved, and the service life of the battery can be prolonged. In addition, the control method used in the present application is relatively simple and easy to implement.

### BRIEF DESCRIPTION OF THE DRAWINGS

To more clearly illustrate the technical solutions in embodiments of the present application, the drawings required for illustrating the embodiments or exemplary technologies are briefly described below. Apparently, the drawings in the following description illustrate merely some embodiments of the present application, and those of ordinary skill in the art may still derive other drawings from these drawings without creative efforts.
FIG. 1 is a topological diagram of a three-phase cascaded H-bridge battery energy storage system.
FIG. 2 is a schematic diagram of an application scenario of a modulation method for a cascaded energy storage system according to the present application.
FIG. 3 is a schematic flowchart of a modulation method for a cascaded energy storage system according to an embodiment of the present application.
FIG. 4 is a waveform diagram of carriers corresponding to the respective submodules.
FIG. 5 is a comparison curve graph of a cumulative SOC difference between the solutions of the present application and the related technical solutions.
FIG. 6 is a schematic block diagram of an example of a modulation apparatus according to an embodiment of the present application.
FIG. 7 is a structural block diagram of another example of a modulation apparatus according to an embodiment of the present application.

### EMBODIMENTS OF THE PRESENT DISCLOSURE

The technical solutions in the present application will be described below with reference to the drawings. Apparently, the described embodiments are merely some embodiments of the present application, rather than all of the embodiments.

In the following description, for the purpose of illustration rather than limitation, specific details such as specific system structures and technologies are proposed to facilitate a thorough understanding of the embodiments of the present application. However, it should be understood by those skilled in the art that the present application may also be implemented in other embodiments without these specific details. In other cases, detailed descriptions of well-known systems, apparatuses, circuits, and methods are omitted to avoid hindering the descriptions of the present application by unnecessary details.

The term "comprise" or "include" in this specification indicates presence of described features, integers, steps, operations, elements, and/or components, but does not exclude presence or addition of one or more other features, integers, steps, operations, elements, components, and/or combinations thereof. The terms "comprise", "include", and "provided with", and variations thereof all mean "including but not limited to", unless otherwise specifically emphasized.

Hereinafter, the terms "first" and "second" are used for description only and are not to be construed as indicating or implying relative importance or to implicitly indicate the number of technical features indicated. Therefore, a feature defined with "first" or "second" may explicitly or implicitly include one or more such a feature. In the description of the embodiments of the present application, "a plurality" means two or more, unless otherwise specified.

The term "and/or" herein is only an association relationship that describes the associated objects, and indicates that there may be three relationships. For example, A and/or B may indicate that: only A is present, both A and B are present, and only B is present. In addition, the character "/" herein generally indicates an "or" relationship between the associated objects before and after the "/".

With the development of smart grids, a large amount of renewable energy such as solar energy and wind energy can be incorporated into the power grid. However, due to randomness and instability of the renewable energy, a battery energy storage system with a specific capacity can be added to the alternating current power grid system, to suppress a power fluctuation caused by connection of the renewable energy to a power grid, improve power supply reliability, and improve electric energy quality. With expansion of power generation scale of renewable energy, a battery energy storage system with a larger capacity is needed. In a large-capacity battery energy storage system, a cascaded H-bridge energy storage system has advantages such as strong expandability, a large capacity, a high voltage, and a small harmonic content of an output voltage current, and therefore has a wide application prospect.

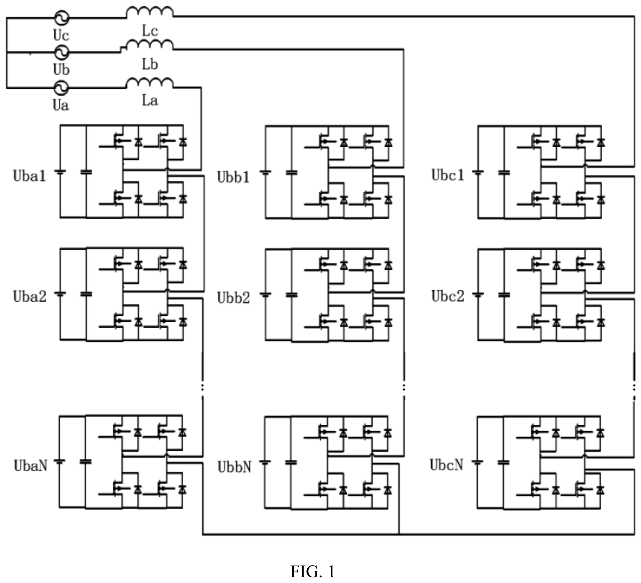

FIG. 1 is a topological diagram of a three-phase cascaded H-bridge battery energy storage system. In FIG. 1, Ua, Ub, and Uc respectively represent a phase-A system voltage, a phase-B system voltage, and a phase-C system voltage; La, Lb, and Lc respectively represent a phase-A connected inductor, a phase-B connected inductor, and a phase-C connected inductor; Uba1, Uba2, UbaN, and the like respectively represent N submodules of the phase A; Ubb1, Ubb2, UbbN, and the like respectively represent N submodules of the phase B; Ubc1, Ubc2, UbcN, and the like respectively represent N submodules of the phase C.

As shown in FIG. 1, each phase of the circuit topology is formed by cascading N same submodules, and each submodule is composed of an energy storage battery, an absorption capacitor, and an H-bridge converter. In other words, each phase is formed by cascading N same H-bridges, and a direct-current side of each H-bridge is connected in parallel to an absorption capacitor and an energy storage battery. The ends of the three phases are connected in a star shape, and each phase is connected to a three-phase power frequency grid by using a connected inductor.

There are many modulation methods for the cascaded H-bridge battery energy storage system, including carrier phase-shifting, carrier stacking, discontinuous modulation, and the like. Power distribution of modules in carrier-stacked modulation is unbalanced. In discontinuous modulation, a relationship between a quantity of switching times and an output waveform needs to be balanced. The carrier phase-shifted modulation technology has a relatively great performance advantage, can ensure power balance between modules, and can also ensure the quality of an output waveform. Therefore, the carrier phase-shifted modulation technology is widely applied to the industrial field. Currently, a modulation strategy commonly used in a cascaded H-bridge battery energy storage system is a carrier phase shifted-pulse width modulation (PS-PWM) strategy. This modulation strategy has advantages such as high quality of output electric energy, capability of outputting a relatively high equivalent switching frequency at a relatively low carrier frequency, ease of controlling an output power of each unit, and ease of implementing modular distributed control.

The PS-PWM modulation method is a modulation method suitable for cascading multi-level inverters. A PS-PWM signal output by each submodule is generated by comparing a triangular carrier with a sinusoidal wave. The sinusoidal waves of all the modules are the same, but there is a phase shift between the triangular carrier of each module and the triangular carrier of the adjacent module, such that the equivalent switching rate of the PS-PWM signal finally superimposed and output by each module is increased, and the output harmonics are greatly reduced.

As shown in FIG. 1, each submodule (H-bridge) of each phase adopts a PS-PWM modulation method with a low switching frequency, modulation waves (such as sinusoidal waves) of the respective submodules are the same, and the submodules are separately modulated by using N groups of triangular carriers, where the triangular carriers have the same frequency and amplitude, but the phases sequentially differ by a fixed angle, so that the PS-PWM pulses (signals) output by the submodules are also staggered by a certain angle, which greatly increases the equivalent switching frequency. After superposition, a waveform finally output by each phase is a multi-level step wave, and the harmonic content of the output voltage can be greatly reduced by selecting a suitable phase-shift angle.

Phase A in FIG. 1 is taken as an example. The circuit system of phase A includes N submodules. In this case, N carriers may be generated, and the N carriers exhibit successive phase differences of 2π/N. In this case, the initial phase angles (initial phases) of the N carriers may be sequentially 2π/N, (2π/N) × 2, (2π/N) × 3, ..., and 2π; that is, in the ascending order of the initial phase angles, an initial phase angle of an i^{th} carrier is (2π/N) × i, where i is any positive integer not greater than N. In this way, modulation waves of the respective submodules are completely consistent, amplitudes and frequencies of the carriers are also consistent, but phases of the carriers are different. The N carriers are sequentially allocated to the N submodules of the phase A. The carrier corresponding to each submodule may be compared with a same modulation wave (usually a sinusoidal wave), to generate a control signal for an H-bridge of the submodule, and on/off of each switch in the H-bridge is controlled by using the control signal, thereby implementing modulation on a waveform output by each submodule. In this case, an inverter voltage waveform formed after waveform signals output by the N submodules are serially superimposed is basically a sinusoidal voltage in an alternating current power grid.

In the PS-PWM modulation method, a triangular carrier is compared with a modulation wave to output a control signal, such that the method has simple calculation and is easy to implement, can reduce dependence of a control system on hardware, and can solve a real-time problem of generating the control signal. However, because there is a slight difference between initial phase angles of carriers corresponding to the submodules, output or input powers of the submodules are not completely the same. To be specific, a difference between triangular carriers of the submodules causes the active power of a single module to be unequal. Consequently, states of charge (SOCs) of energy storage batteries of different submodules are different. This increases capacity inconsistency between submodules in the same cascaded phase, and reduces an available capacity of the energy storage system. Further, an imbalance in the SOCs of the batteries will shorten the service life of the energy storage system and reduce the usage efficiency of the system. For example, a battery with a larger SOC is prone to overcharge during charging, while a battery with a smaller SOC is prone to overdischarge during discharging, and in severe cases, the submodule has to be removed, which not only reduces the stability of the system, but also reduces the utilization rate of the batteries and degrades the service life of the batteries.

Based on this, the embodiments of the present application provide a modulation method for a cascaded energy storage system, so as to solve a problem of imbalance of SOCs of energy storage batteries between intra-phase submodules of the cascaded energy storage system in a carrier phase-shifted modulation method.

The method according to the embodiments of the present application can be applied to a cascaded energy storage system, and the cascaded energy storage system may include N submodules (N ≥ 2) connected in cascade. According to the modulation method, N carriers that correspond one-to-one to the N submodules may be first determined. On this basis, during the 1^{st}, 3^{rd}, 5^{th} or other odd-numbered cycle, the N carriers are applied to the N submodules according to the first correspondence relationship, so as to modulate the waveform signals output by the N submodules. In addition, during the 2^{nd}, 4^{th}, 6^{th} or other even-numbered cycle, the waveform signals output by the N submodules are modulated using the N carriers according to the second correspondence relationship, where the first correspondence relationship is different from the second correspondence relationship.

Because the first correspondence relationship and the second correspondence relationship are different, the same submodule can be influenced by two carriers with different initial phase angles within two adjacent cycles, and the same carrier can influence two different submodules within two adjacent cycles. Compared with the related art in which waveform modulation is continuously performed on a submodule by using the same carrier based on a fixed correspondence relationship, the present application can alleviate unequal active power distribution of the submodules caused by the fixed correspondence relationship, and can suppress the energy unevenness, such that voltages on direct-current sides of the submodules tend to be consistent, and the inconsistency of the battery capacity can be alleviated, which equalizes the SOCs of the energy storage batteries.

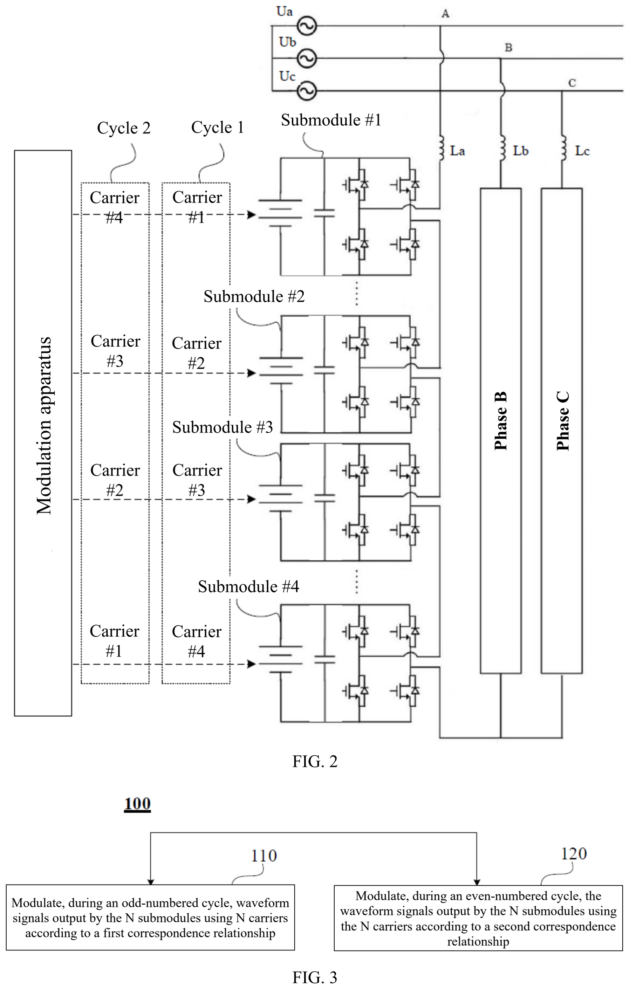

FIG. 2 is a schematic diagram of an application scenario of a modulation method for a cascaded energy storage system according to an embodiment of the present application. The modulation method for a cascaded energy storage system according to the embodiments of the present application may be applied to the scenario shown in FIG. 2. As shown in FIG. 2, the scenario includes a cascaded energy storage system and a modulation apparatus. The modulation apparatus is configured to apply carriers to submodules of the cascaded energy storage system, so as to modulate waveform signals output by the submodules. In some cases, the modulation apparatus may also be considered as a portion of the cascaded energy storage system.

The cascaded energy storage system may be a cascaded H-bridge battery energy storage system, a cascaded half-bridge battery energy storage system, a battery energy storage system based on a modular multilevel converter (MMC), or the like. The cascaded energy storage system includes a three-phase bridge arm. Each phase bridge arm includes N submodules (N ≥ 2), for example, four submodules shown in FIG. 2. One end of each phase bridge arm is connected to a three-phase power frequency grid through a connected inductor, and the other end thereof is connected in a star shape. Each submodule includes energy storage batteries disposed in parallel, an absorption capacitor, and a converter (also referred to as an inverter). The converter may be an H-bridge or a half-bridge, but is not limited thereto.

The modulation apparatus is configured to output a carrier to the submodule to modulate the waveform signal output by the submodule. The carrier may be, for example, a triangular carrier or a trapezoidal carrier. The modulation apparatus may be, for example, any electronic device, chip, controller, or processor that can implement the above functions, such as an upper computer, a lower computer, an industrial computer, an industrial control computer, or a power conversion system (PCS). The modulation method according to the embodiments of the present application may be performed by the modulation apparatus, so as to solve a problem of imbalance of SOCs of energy storage batteries between intra-phase submodules in the cascaded energy storage system.

The following uses an example in which the modulation apparatus in FIG. 2 modulates the four submodules of the phase-A bridge arm to describe the modulation method according to the embodiment of the present application. According to the modulation method according to the embodiments of the present application, the modulation apparatus first determines four carriers (e.g., triangular carriers or trapezoidal carriers). Initial phase angles of the four carriers are different from each other and are in one-to-one correspondence with the four submodules. During an odd-numbered cycle such as the 1^{st} cycle, the modulation apparatus correspondingly applies four carriers to four submodules according to the first correspondence relationship; that is, a carrier #1, a carrier #2, a carrier #3, and a carrier #4 are respectively applied to a submodule #1, a submodule #2, a submodule #3, and a submodule #4 in sequence. During an even-numbered cycle such as the 2^{nd} cycle, the modulation apparatus correspondingly applies four carriers to four submodules according to the second correspondence relationship; that is, a carrier #1, a carrier #2, a carrier #3, and a carrier #4 are respectively applied to a submodule #4, a submodule #3, a submodule #2, and a submodule #1 in sequence.

In this way, a carrier swapping operation may be periodically performed, and waveform signals output by the same submodule are modulated alternately by using two different carriers. That is, waveform signals output by the submodule #1 are modulated alternately by using the carrier #1 and the carrier #4, waveform signals output by the submodule #2 are modulated alternately bu using the carrier #2 and the carrier #3, waveform signals output by the submodule #3 are modulated alternately by using the carrier #3 and the carrier #2, and waveform signals output by the submodule #4 are modulated alternately by using the carrier #4 and the carrier #1.

Compared with the related art in which waveform modulation is continuously performed on a submodule by using the same carrier based on a fixed correspondence relationship, in the present application, waveform modulation is performed on the same submodule alternately by using two different carriers, and the same carrier is applied to two different submodules. Therefore, the same submodule can be influenced by two carriers with different initial phase angles, and the same carrier can influence two different submodules. In this way, unequal active power distribution of the submodules caused by the fixed correspondence relationship can be alleviated, which equalizes the SOCs of the energy storage batteries.

Based on the topology diagram shown in FIG. 1 or the application scenario shown in FIG. 2, with reference to the modulation method for a cascaded energy storage system according to the embodiments of the present application, the following continues to specifically analyze and solve the technical problem proposed in the present application.

Referring to FIG. 3, FIG. 3 is a schematic flowchart of a modulation method 100 for a cascaded energy storage system according to an embodiment of the present application. The execution body of the modulation method 100 is the aforementioned modulation apparatus, and the method is used to modulate the waveform signals of the submodules of the aforementioned cascaded energy storage system, where the cascaded energy storage system includes N submodules connected in cascade, where N ≥ 2. As shown in FIG. 3, the modulation method 100 includes steps 110 to 120.

In step 110, the modulation apparatus modulates, during an odd-numbered cycle, waveform signals output by the N submodules using N carriers according to a first correspondence relationship;

In step 120, the modulation apparatus modulates, during an even-numbered cycle, the waveform signals output by the N submodules using the N carriers according to a second correspondence relationship, where in the first correspondence relationship and the second correspondence relationship, the N carriers correspond one-to-one to the N submodules, and the first correspondence relationship is different from the second correspondence relationship.

Specifically, the cascaded energy storage system includes N submodules connected in cascade, where N is an integer greater than or equal to 2. The modulation apparatus may first determine the N carriers that correspond one-to-one to the N submodules. The N carriers herein may be triangular carriers or trapezoidal carriers, and initial phase angles of the N carriers may be different from each other. For example, an initial phase angle of an i^{th} carrier is (2π/N) × i, where i is any positive integer not greater than N; that is, initial phase angles of the 1^{st} carrier to the N^{th} carrier are sequentially 2π/N, (2π/N) × 2, (2π/N) × 3, ..., and 2π. For another example, the initial phase angle of the i^{th} carrier is (π/N) × i, where i is any positive integer not greater than N; that is, initial phase angles of the 1^{st} carrier to the Nₜₕ carrier are sequentially π/N, (π/N) × 2, (π/N) × 3, ..., and π.

On this basis, during the 1^{st}, 3^{rd}, 5^{th} or other odd-numbered cycle, the N carriers are applied to the N submodules according to the first correspondence relationship, so as to modulate the waveform signals output by the N submodules. In addition, during the 2^{nd}, 4^{th}, 6^{th} or other even-numbered cycle, the waveform signals output by the N submodules are modulated using the N carriers according to the second correspondence relationship, where the first correspondence relationship is different from the second correspondence relationship.

Herein, regardless of the first correspondence relationship or the second correspondence relationship, the N submodules are in one-to-one correspondence with the N carriers. A difference lies in that a correspondence relationship or an alignment sequence between the two is different. Specifically, at least one of the submodules corresponds to different carriers in the first correspondence relationship and the second correspondence relationship, that is, corresponds to two carriers with different initial phase angles. In other words, for at least one of the carriers, the submodule corresponding thereto in the first correspondence relationship is different from the submodule corresponding thereto in the second correspondence relationship. The first correspondence relationship and the second correspondence relationship may be preset by the staff, or may be randomly generated by the modulation apparatus or generated according to a specific principle.

**Table 1: An example of the first correspondence relationship and the second correspondence relationship**

| | Submodule | Carrier | | Submodule | Carrier |
|---|---|---|---|---|---|
| First correspondence relationship | Submodule #1 | Carrier #1 | Second correspondence relationship | Submodule #1 | Carrier #5 |
| | Submodule #2 | Carrier #2 | | Submodule #2 | Carrier #4 |
| | Submodule #3 | Carrier #3 | | Submodule #3 | Carrier #3 |
| | Submodule #4 | Carrier #4 | | Submodule #4 | Carrier #2 |
| | Submodule #5 | Carrier #5 | | Submodule #5 | Carrier #1 |

Table 1 shows an example of the first correspondence relationship and the second correspondence relationship. As shown in Table 1, the cascaded energy storage system includes five submodules (i.e., a value of N is 5) that are connected in cascade, and the five submodules are a submodule #1 to a submodule #5. The modulation apparatus determines five carriers based on the five submodules, and the five carriers are a carrier #1 to a carrier #5. In the first correspondence relationship, the submodule #1 to the submodule #5 respectively correspond to the carrier #1 to the carrier #5 in sequence, and in the second correspondence relationship, the submodule #1 to the submodule #5 respectively correspond to the carrier #5 to the carrier #1 in sequence.

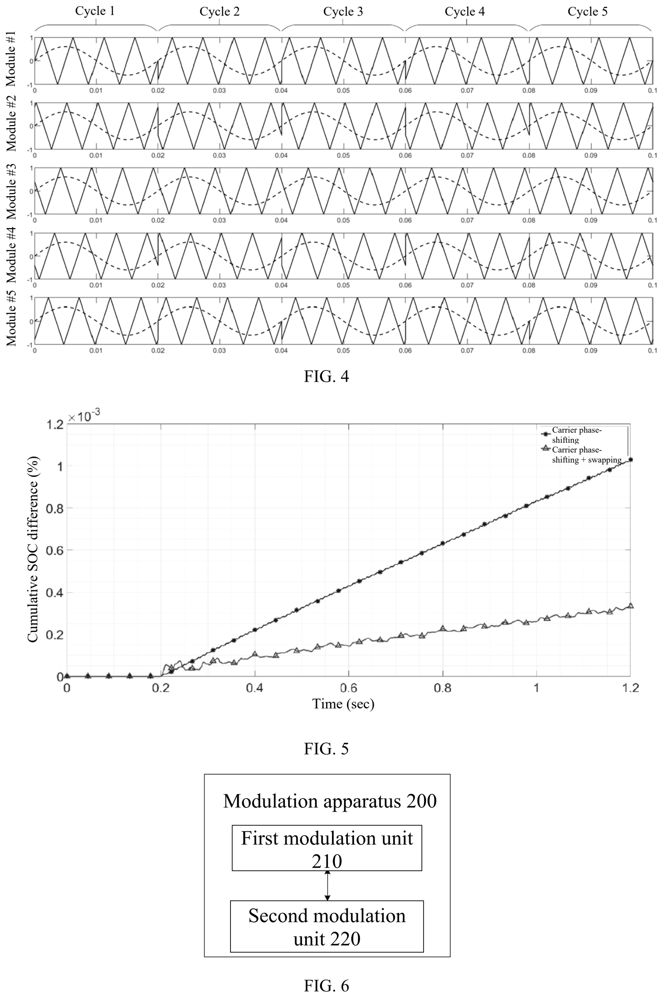

FIG. 4 is a waveform diagram of carriers corresponding to the respective submodules. In FIG. 4, the abscissa represents time, for example, a plurality of different periods are included, and the ordinate represents an amplitude of each carrier. Referring to Table 1 and FIG. 4, during the 1^{st}, 3^{rd}, 5^{th} or other odd-numbered cycle, the control apparatus correspondingly applies five carriers to five submodules according to the first correspondence relationship (that is, the submodule #1 to the submodule #5 respectively correspond to the carrier #1 to the carrier #5 in sequence), so as to modulate waveform signals output by the five submodules. During the 2^{nd} 4^{th} or other even-numbered cycle, a carrier swapping operation is performed. In this case, the control apparatus correspondingly applies five carriers to five submodules according to the second correspondence relationship (that is, the submodule #1 to the submodule #5 respectively correspond to the carrier #5 to the carrier #1 in sequence), so as to modulate the waveform signals output by the five submodules.

According to the modulation method 100 for a cascaded energy storage system according to the embodiments of the present application, the N carriers and the N submodules have two correspondence relationships: the first correspondence relationship and the second correspondence relationship, and the N carriers can be applied to the N submodules alternately by using the two correspondence relationships. Because the first correspondence relationship is different from the second correspondence relationship, within two adjacent cycles, two different carriers are applied to at least a portion of the N submodules for modulation. That is, waveform signals output by the same submodule may be alternately modulated by using two different carriers, and the same carrier can be applied to two different submodules. Therefore, the same submodule can be influenced by two carriers with different initial phase angles within two adjacent cycles, and the same carrier can influence two different submodules within two adjacent cycles. Compared with the related art in which waveform modulation is continuously performed on a submodule by using the same carrier based on a fixed correspondence relationship, the present application can alleviate unequal active power distribution of the submodules caused by the fixed correspondence relationship, and can suppress the energy unevenness, such that voltages on direct-current sides of the submodules tend to be consistent, and the inconsistency of the battery capacity can be alleviated, which equalizes the SOCs of the energy storage batteries.

In the modulation method for a cascaded energy storage system according to the embodiments of the present application, a carrier swapping operation is performed, such that a problem of imbalance of SOCs of energy storage batteries between intra-phase submodules of the cascaded energy storage system in a carrier phase-shifted modulation method can be solved. Therefore, the problem of overcharging and overdischarging of the battery set can be mitigated, the battery can operate in an optimal state, the utilization rate of the battery can be improved, and the service life of the battery can be prolonged. In addition, the control method used in the present application is relatively simple and easy to implement.

Optionally, duration of any two adjacent cycles may be the same or different. For example, duration of the odd-numbered cycles is the same and is the first duration, and duration of the even-numbered cycles is the same and is the second duration. The first duration may be equal to or unequal to the second duration.

Optionally, duration of any two adjacent cycles is the same, that is, the first duration is equal to the second duration. For example, the duration is greater than or equal to a carrier period of at least one carrier. For example, the duration may be a length of 1, 1.5, 2, 3, 5, or more power frequency cycles (each power frequency cycle is 0.02 seconds).

In a possible implementation, in the first correspondence relationship and the second correspondence relationship, the submodule corresponding to any carrier is different.

Namely, each submodule can be influenced by two carriers with different initial phase angles within two adjacent cycles, and any carrier can influence two different submodules within two adjacent cycles. In this way, unequal active power distribution can be alleviated to a greater extent, and energy unevenness can be suppressed as much as possible, such that voltages on direct-current sides of the submodules tend to be consistent, and the inconsistency of the battery capacity can be alleviated, which equalizes the SOCs of the energy storage batteries.

**Table 2: Another example of the first correspondence relationship and the second correspondence relationship**

| | Submodule | Carrier | | Submodule | Carrier |
|---|---|---|---|---|---|
| First correspondence relationship | Submodule #1 | Carrier #1 | Second correspondence relationship | Submodule #1 | Carrier #4 |
| | Submodule #2 | Carrier #2 | | Submodule #2 | Carrier #3 |
| | Submodule #3 | Carrier #3 | | Submodule #3 | Carrier #2 |
| | Submodule #4 | Carrier #4 | | Submodule #4 | Carrier #1 |

Table 2 shows another example of the first correspondence relationship and the second correspondence relationship. As shown in Table 2, the cascaded energy storage system includes four submodules (i.e., a value of N is 4) that are connected in cascade, and the four submodules are a submodule #1 to a submodule #4. The modulation apparatus determines four carriers based on the four submodules, and the four carriers are a carrier #1 to a carrier #4. In the first correspondence relationship, the submodule #1 to the submodule #4 respectively correspond to the carrier #1 to the carrier #4 in sequence, and in the second correspondence relationship, the submodule #1 to the submodule #4 respectively correspond to the carrier #4 to the carrier #1 in sequence. In this case, in the first correspondence relationship and the second correspondence relationship, the carrier #1 corresponds to the submodule #1 and the submodule #4, the carrier #2 corresponds to the submodule #2 and the submodule #3, the carrier #3 corresponds to the submodule #3 and the submodule #2, and the carrier #4 corresponds to the submodule #4 and the submodule #1. Namely, any carrier corresponds to different submodules, and any submodule can be influenced by two carriers with different initial phase angles within two adjacent cycles, which equalizes the SOCs of the energy storage batteries of the four submodules.

In another possible implementation, in the first correspondence relationship and the second correspondence relationship, the submodules corresponding to a portion of the carriers are the same.

Namely, a portion of the N carriers perform the swapping operation, and the remaining carriers do not perform the swapping operation. In this case, the carriers that do not perform the swapping operation are continuously applied to a fixed submodule. With the above settings, an operation of the adjustment apparatus can be simplified, and application scenarios of the modulation method 100 according to the embodiments of the present application can be enriched. For example, a carrier with a larger initial phase angle is likely to exert greater influence on SOC balancing of energy storage batteries, and for a certain carrier or a portion of the carriers with intermediate initial phase angles (neither large nor small), the influence thereof on SOC balancing of the energy storage batteries also falls within a medium range. In this case, a swapping operation may not be performed on these carriers, but a carrier with a smaller initial phase angle and a carrier with a larger initial phase angle are mutually swapped, so as to promote SOC balancing of energy storage batteries of different submodules.

Optionally, there may be an odd quantity of submodules. In this case, an odd quantity of carriers with different initial phase angles need to be correspondingly determined (generated), and a carrier (e.g., the carrier #3 in Table 1) with the median initial phase angle may not perform a swapping operation. In this case, regardless of the first correspondence relationship and the second correspondence relationship, the carrier corresponds to the same submodule (i.e., the submodule #3).

In still another possible implementation, an i^{th} carrier in the first correspondence relationship and an (N+1-i)^{th} carrier in the second correspondence relationship correspond to the same submodule, where a larger value of i indicates a larger initial phase angle of the i^{th} carrier, and i is any positive integer not greater than N.

Namely, the initial phase angles are sorted in an ascending order. A carrier with a larger initial phase angle is assigned a higher sequence number. For example, the initial phase angle of the i^{th} carrier is (2π/N) × i or (π/N) × i. The i^{th} carrier in the first correspondence relationship and the (N+1-i)^{th} carrier in the second correspondence relationship correspond to a same submodule, such that a carrier with the largest initial phase angle and a carrier with the smallest initial phase angle can be alternately applied to the submodule, a carrier with a second largest initial phase angle and a carrier with a second smallest initial phase angle can be alternately applied to another submodule, and so on. Because a carrier with a larger initial phase angle is likely to exert greater influence on SOC balancing of the energy storage batteries, the above settings can further equalize the SOCs of the energy storage batteries of the different submodules.

For example, in the aforementioned Table 1, there may be an odd quantity of submodules; for example, a value of N is 5. In this case, five carriers with different initial phase angles need to be correspondingly determined, and initial phase angles of a carrier #1 to a carrier #5 sequentially increase (e.g., an initial phase angle of an i^{th} carrier is (2π/N) × i). In this case, the carrier #1 (i = 1) and the carrier #5 (N+1-1 = 5) may perform a swapping operation, and the carrier #2 (i = 2) and the carrier #4 (N+1-i = 4) may perform a swapping operation; the carrier #3 is continuously applied to a submodule #3, that is, the carrier #3 does not perform a swapping operation.

For another example, in the aforementioned Table 2, there may be an even quantity of submodules; for example, a value of N is 4. In this case, four carriers with different initial phase angles need to be correspondingly determined, and initial phase angles of a carrier #1 to a carrier #4 sequentially increase (e.g., an initial phase angle of an i^{th} carrier is (2π/N) × i). In this case, the carrier #1 (i = 1) and the carrier #4 (N+1-i = 4) may perform a swapping operation, and the carrier #2 (i = 2) and the carrier #3 (N+1-i = 3) may perform a swapping operation. In this case, all of the carriers need to perform a swapping operation.

In yet another possible implementation, the N carriers are sorted in an ascending order of initial phase angles and then divided into M carrier groups, where a quantity of carriers included in each carrier group is the same and greater than 1, and M is an even number (e.g., 2, 4, or 6); carriers in an i^{th} carrier group in the first correspondence relationship and carriers in an (M+1-i)^{th} carrier group in the second correspondence relationship correspond to the same submodule, where i is any positive integer not greater than M.

Optionally, each carrier group includes j carriers (j = N/M). In this case, the j carriers in the i^{th} carrier group in the first correspondence relationship and the j carriers in the (M+1-i)^{th} carrier group in the second correspondence relationship correspond to the same j submodules, and for example, correspond to a submodule #1 to a submodule #j.

In this case, the carriers in the i^{th} carrier group and the carriers in the (M+1-i)^{th} carrier group may be periodically mutually swapped, which equalizes the SOCs of the energy storage batteries of different submodules.

Herein, i is any positive integer not greater than M. For example, i may be 1, 2, 3, ..., or M. The 1^{st} carrier group in the first correspondence relationship and the M^{th} (that is, the last) carrier group in the second correspondence relationship correspond to a same submodule, that is, the 1^{st} carrier group and the M^{th} carrier group perform a mutual swapping operation; the 2^{nd} carrier group in the first correspondence relationship and the (M-1)^{th} (that is, penultimate) carrier group in the second correspondence relationship correspond to a same submodule, that is, the 2^{nd} carrier group and the (M-1)^{th} carrier group perform a mutual swapping operation, and so on. With the above settings, a carrier group with the largest initial phase angle and a carrier group with the smallest initial phase angle can be alternately applied to a same group of submodules (the carriers correspond one-to-one to the submodules), a carrier group with a second largest initial phase angle and a carrier group with a second smallest initial phase angle can be alternately applied to another group of submodules, and so on. Because a carrier with a larger initial phase angle is likely to exert greater influence on SOC balancing of the energy storage batteries, the SOCs of the energy storage batteries of the different submodules can be further equalized.

In a specific example, each phase of the three-phase cascaded energy storage system includes 30 submodules (N = 30) connected in cascade. In this case, 30 carriers with different initial phase angles need to be determined. For example, an initial phase angle of an i^{th} carrier is (2π/30) × i, where i is any positive integer not greater than 30, and frequencies of the 30 carriers are all 150 Hz. The i^{th} carrier in the first correspondence relationship and the (N+1-i)^{th} carrier in the second correspondence relationship correspond to a same submodule. Each time one power frequency cycle (i.e., duration of the cycle is 0.02 seconds of one power frequency cycle) elapses, carrier swapping is performed once, that is, the i^{th} carrier and the (N+1-1)^{th} carrier are mutually swapped.

FIG. 5 is a comparison curve graph of a cumulative SOC difference between the solutions of the present application and the related technical solutions. As shown in FIG. 5, compared with the related art (carrier phase-shifting), in the solution (carrier phase-shifting + swapping) of the present application, the maximum cumulative SOC difference within 1 second between the single-phase submodules is reduced by 1/3. The cumulative SOC difference indicates a maximum SOC difference between different energy storage batteries. A smaller value of the cumulative SOC difference indicates higher SOC consistency among the energy storage batteries of the respective submodules. This indicates that the modulation method 100 according to the embodiments of the present application can effectively alleviate the inconsistency of the battery capacity, which equalizes the SOCs of the energy storage batteries.

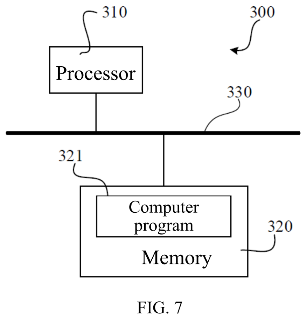

The modulation method for a cascaded energy storage system according to the embodiments of the present application is described in detail above with reference to FIGs. 1-5, and the modulation apparatus according to the embodiments of the present application is described below with reference to FIGs. 6 and 7. It should be understood that the modulation apparatus shown in FIG. 6 and FIG. 7 can implement one or more steps in the method procedures shown in FIG. 3. To avoid repetition, details are not described herein again.

FIG. 6 is a schematic block diagram of a modulation apparatus 200 according to an embodiment of the present application. The modulation apparatus 200 is configured to modulate the waveform signals of the submodules of the aforementioned cascaded energy storage system, where the cascaded energy storage system includes N submodules connected in cascade, where N ≥ 2. As shown in FIG. 6, the modulation apparatus 200 includes a first modulation unit 210 and a second modulation unit 220.

The first modulation unit 210 is configured to modulate, during an odd-numbered cycle, waveform signals output by the N submodules using N carriers according to a first correspondence relationship.

The second modulation unit 220 is configured to modulate, during an even-numbered cycle, the waveform signals output by the N submodules using the N carriers according to a second correspondence relationship, where in the first correspondence relationship and the second correspondence relationship, the N carriers correspond one-to-one to the N submodules, and the first correspondence relationship is different from the second correspondence relationship.

Optionally, the submodule corresponding to each carrier in the first correspondence relationship and the second correspondence relationship is different.

Optionally, the submodules corresponding to a portion of the carriers in the first correspondence relationship and the second correspondence relationship are the same.

Optionally, an i^{th} carrier in the first correspondence relationship and an (N+1-1)^{th} carrier in the second correspondence relationship correspond to the same submodule, where a larger value of i indicates a larger initial phase angle of the i^{th} carrier, and i is any positive integer not greater than N.

Optionally, the N carriers are sorted in an ascending order of initial phase angles and then divided into M carrier groups, where a quantity of carriers included in each carrier group is the same and greater than 1, and M is an even number greater than zero; carriers in an i^{th} carrier group in the first correspondence relationship and carriers in an (M+1-i)^{th} carrier group in the second correspondence relationship correspond to the same submodule, where i is any positive integer not greater than M.

Optionally, an initial phase angle of an i^{th} carrier in the N carriers is (2π/N) × i, or the initial phase angle of the i^{th} carrier in the N carriers is (π/N) × i, where i is any positive integer not greater than N.

Optionally, each submodule includes energy storage batteries disposed in parallel, an absorption capacitor, and a converter.

Optionally, the cascaded energy storage system includes a cascaded H-bridge or a cascaded half-bridge.

Optionally, the carrier includes a triangular carrier or a trapezoidal carrier.

Specifically, the modulation apparatus 200 may correspond to the modulation apparatus in the modulation method 100 according to the embodiments of the present application. The modulation apparatus 200 may include units configured to perform the method performed by the modulation apparatus in FIG. 3. In addition, the units in the modulation apparatus 200 and the above other operations and/or functions are separately used to implement corresponding procedures of the modulation method 100. A specific process in which the units perform the above corresponding steps is described in detail in the modulation method 100. For brevity, details are not described herein again.

The embodiments of the present application further provide a modulation apparatus 300. FIG. 7 is a structural block diagram of a modulation apparatus 300 according to an embodiment of the present application. As shown in FIG. 7, the modulation apparatus 300 includes a processor 310 and a memory 320. The above components may be connected via one or more buses 330.

The modulation apparatus 300 further includes a computer program 321, where the computer program 321 is stored in the memory 320, and the computer program 321, when executed by the processor 310, causes the modulation apparatus 300 to perform the modulation method 100 shown in FIG. 3. All related content of the steps in the above method embodiments may be cited in function descriptions of corresponding physical components, and details are not described herein again.

The embodiments of the present application further provide a computer-readable storage medium, where the computer-readable storage medium includes a computer program; the computer program, when running on a computer, causes the computer to perform the method according to the above method embodiments.

The embodiments of the present application further provide a computer program product, which includes a computer program code, where the computer program code, when running on an electronic device, causes the electronic device to perform the method according to the above method embodiments.

The embodiments of the present application further provide a chip system, which includes a memory and a processor, where the memory is configured to store a computer program, and the processor is configured to invoke the computer program from the memory and execute the computer program, such that an electronic device provided with the chip system performs the method according to the above method embodiments.

The chip system may include an input circuit or interface configured to send information or data, and an output circuit or interface configured to receive information or data.

It should be understood that, in the embodiments of the present application, the processor may be a central processing unit (CPU), or other general-purpose processor, a digital signal processor (DSP), an application specific integrated circuit (ASIC), a field-programmable gate array (FPGA) or other programmable logic device, a discrete gate or transistor logic device, a discrete hardware component, etc. The general-purpose processor may be a microprocessor or the processor may be any conventional processor.

It should be further understood that the memory in the embodiments of the present application may be a volatile memory or a non-volatile memory, or may include both volatile and non-volatile memories. The non-volatile memory may be a read-only memory (ROM), a programmable ROM (PROM), an erasable PROM (EPROM), an electrically EPROM (EEPROM), or a flash memory. The volatile memory may be a random access memory (RAM) that serves as an external cache. By way of example but not limitation, many forms of random access memories (RAMs) are available, for example, a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM).

Those of ordinary skill in the art will recognize that the units and algorithm steps of various examples described in conjunction with the embodiments disclosed herein can be implemented in electronic hardware, or a combination of computer software and electronic hardware. Whether these functions are performed in hardware or software depends on the particular application and design constraints of the technical solutions. Those skilled in the art may implement the described functions in varying ways for each particular application, but such implementation should not be interpreted as departing from the scope of the present application.

Those skilled in the art may clearly understand that, for the convenience and brevity in description, the specific working processes of the systems, apparatuses, and units described above may refer to the corresponding processes in the aforementioned method embodiments, and details are not described herein again.

In the several embodiments provided in the present application, it should be understood that the disclosed systems, apparatuses, and methods may be implemented in other ways. For example, the above-described apparatus embodiments are merely illustrative. For example, the division of the units is only a logical functional division, and in actual implementation, there may be other division methods. For example, a plurality of units or components may be combined or integrated into another system, or some features may be omitted or not executed. In addition, the coupling, direct coupling, or communication connection between each other that is shown or discussed may be indirect coupling or communication connection through some interfaces, apparatuses, or units, and it may be in electrical, mechanical, or other forms.

The units described as separate parts may or may not be physically separate, and parts displayed as units may or may not be physical units, that is, they may be located in one place or distributed across a plurality of network units. Some or all of the units may be selected according to actual needs to achieve the purpose of the solutions of the embodiments.

In addition, various functional units in the embodiments of the present application may be integrated into one processing unit, or various units may be physically present separately, or two or more units may be integrated into one unit.

The functions may be stored in a computer-readable storage medium if they are implemented in software functional units and sold or used as independent products. Based on such understandings, the technical solutions of the present application substantially or a part thereof that contributes to the prior art, or a part of the technical solutions, may be embodied in a software product, which is stored in a storage medium and includes several instructions for causing a computer device (which may be a personal computer, a server, or a network device) to perform all or part of the steps of the methods as defined in the embodiments of the present application. The aforementioned storage media include various media capable of storing program codes, such as a U-disk, a mobile hard disk, a read-only memory (ROM), a random access memory (RAM), a magnetic disk, and an optical disk.

The above descriptions are only embodiments of the present application, but the protection scope of the present application is not limited thereto. Any variations or substitutions that can be easily conceived by those skilled in the art within the technical scope disclosed in the present application shall be covered by the protection scope of the present application. Therefore, the protection scope of the present application shall be subject to the protection scope of the claims described.

## Claims

1. A modulation method for a cascaded energy storage system, wherein the cascaded energy storage system comprises N submodules connected in cascade, wherein N ≥ 2, and the modulation method comprises:
modulating, during an odd-numbered cycle, waveform signals output by the N submodules using N carriers according to a first correspondence relationship; and
modulating, during an even-numbered cycle, the waveform signals output by the N submodules using the N carriers according to a second correspondence relationship, wherein in the first correspondence relationship and the second correspondence relationship, the N carriers correspond one-to-one to the N submodules, and the first correspondence relationship is different from the second correspondence relationship.

2. The modulation method according to claim 1, wherein the submodule corresponding to each carrier in the first correspondence relationship and the second correspondence relationship is different.

3. The modulation method according to claim 1, wherein the submodules corresponding to a portion of the carriers in the first correspondence relationship and the second correspondence relationship are the same.

4. The modulation method according to any one of claims 1 to 3, wherein an i^{th} carrier in the first correspondence relationship and an (N+1-i)^{th} carrier in the second correspondence relationship correspond to the same submodule, wherein a larger value of i indicates a larger initial phase angle of the i^{th} carrier, and i is any positive integer not greater than N.

5. The modulation method according to any one of claims 1 to 3, wherein the N carriers are sorted in an ascending order of initial phase angles and then divided into M carrier groups, wherein a quantity of carriers comprised in each carrier group is the same and greater than 1, and M is an even number; carriers in an i^{th} carrier group in the first correspondence relationship and carriers in an (M+1-i)^{th} carrier group in the second correspondence relationship correspond to the same submodule, wherein i is any positive integer not greater than M.

6. The modulation method according to any one of claims 1 to 3, wherein an initial phase angle of an i^{th} carrier in the N carriers is (2π/N) × i, or the initial phase angle of the i^{th} carrier in the N carriers is (π/N) × i, wherein i is any positive integer not greater than N.

7. The modulation method according to any one of claims 1 to 3, wherein each submodule comprises energy storage batteries disposed in parallel, an absorption capacitor, and a converter.

8. The modulation method according to any one of claims 1 to 3, wherein the cascaded energy storage system comprises a cascaded H-bridge or a cascaded half-bridge.

9. The modulation method according to any one of claims 1 to 3, wherein the carrier comprises a triangular carrier or a trapezoidal carrier.

10. A modulation apparatus for a cascaded energy storage system, wherein the cascaded energy storage system comprises N submodules connected in cascade, wherein N ≥ 2, and the modulation apparatus comprises:
a first modulation unit, configured to modulate, during an odd-numbered cycle, waveform signals output by the N submodules using N carriers according to a first correspondence relationship; and
a second modulation unit, configured to modulate, during an even-numbered cycle, the waveform signals output by the N submodules using the N carriers according to a second correspondence relationship, wherein in the first correspondence relationship and the second correspondence relationship, the N carriers correspond one-to-one to the N submodules, and the first correspondence relationship is different from the second correspondence relationship.

11. A computer-readable storage medium, wherein the computer-readable storage medium stores a computer program, and the computer program, when running on an electronic device, causes the electronic device to perform the modulation method according to any one of claims 1 to 9.
